# EUROPEAN PATENT APPLICATION

(11) **EP 1 498 245 A1**
(43) Date of publication of application: **19.01.2005**
(21) Application number: 03016053.5
(22) Date of filing: 15.07.2003
(51) Int. Cl.: B29B 9/12, B29B 9/14, B29B 7/90

(54) **Spheroidally shaped fibre reinforced thermoplastic pellets**

(71) Applicant: Borealis Technology OY, 06201 Porvoo (FI)
(72) Inventor: Zopf, Ernst, Ing., 4222 St. Georgen/Gusen (AT); Eggetsberger, Mario, 4615 Holzhausen (AT); Jarzombek, Manfred, 4040 Linz (AT); Prokschi, Hermann, 4231 Untergaisbach (AT); Schininger, Renate, Ing., 4020 Linz (AT)
(74) Representative: VA TECH Patente GmbH & Co

(57) **Abstract**

Spheroidally shaped thermoplastic resin pellets containing reinforcing fibres longer than the longest dimension of the pellets or having at least 40 % by weight of the fibres longer than the 0,4 fold of the longest fibre, a process for their production and their use as automotive parts.

## Description

The present invention relates to a process for the production of thermoplastic resin pellets having spheroidal shape and containing long reinforcing fibres, the spheroidally shaped pellets and their use.

### Background of the Invention:

Fibre reinforced thermoplasts are well known in the art. They usually contain short fibres and can be made and processed like thermoplasts containing fillers. In a simple version thermoplast and short fibre are mixed cold and then processed in an extruder. According to an improved version the thermoplast is molten alone in the first part of the extruder and the short fibre is added via a side feeder to the molten thermoplast. The advantage of short fibre thermoplast is that there are no limitations regarding processability, they can be processed for example by strand pelletising, die face pelletising or water ring pelletising. But due to the intensive kneading which was believed to be necessary to completely impregnate the fibre , the fibres are thereby cut to a great extent.

Long fibre pellets can be obtained by pultrusion, wherein textile glass rovings are impregnated with the melt of the thermoplast, drawn through a die to form strands, which are cut into cylindrically shaped pieces after cooling. The fibres in the cylindrically shaped pellets have the length of the pellet and are oriented in the longitudinal direction.

Such longish pellets are disadvantageous for further processing, since such rods tend to bridging in the feedhopper, and a stable supply of the pellets in the molding machine at the time of injection molding becomes difficult. This can cause trouble during processing which result in a lower output rate.

WO 00/58064 describes a fibre granulate made from continuous fibres, wherein reinforcing staple fibres are helically arranged in a thermoplastic matrix, the reinforcing staple fibres being located in a sheathed zone along with a melted matrix and in a core zone of unmolten thermoplastic staple fibre. The granulate is produced by feeding a staple fibre mixture through a preheating zone, drawing it through a heating nozzle to form a strand, which after twisting and consolidation by cooling is cut into continuous strand pellets, which are cylindrically shaped and contain helically oriented reinforcing fibres longer than the pellets. According to another complicated and two step process in JP-A-06-254847 first a mixture of long and short reinforcing fibres with a thermoplastic resin powder of a size of not more than 1 mm is heated and molten by high temperature nitrogen gas, then charged into a ram type extruder and extruded from a die to form strands, which are cut into cylindrically pellets, which contain long and short fibres.

Although the pellets according to WO 00/58064 and JP-A-06-254847 contain fibres longer than the pellet length, the processes of producing them are extremely difficult, and the pellets still have the disadvantageous cylindrical shape.

### Object of the Invention:

The object of the invention are therefore pellets, which can be produced in a simple way, which contain fibres longer the longest dimension of the pellets or which have, in the case staple fibres of a certain length are applied, a high amount of the staple fibre in or near to the original length of the staple fibre and which do not have cylindrical shape.

### Detailed description of the Invention:

The present invention therefore relates in a first embodiment to a process for the production of thermoplastic resin pellets having spheroidal shape and containing long reinforcing fibres characterised by the following steps in downstream order:
a) melting a thermoplastic resin in a first section of an extruder
b) adding reinforcing fibres to the melt
c) conveying the mixture substantially without kneading to a short mixing section
d) passing the short mixing section, a short pressure build up section and the adjacent die plate
e) cutting the obtained moiety hot by die face pelletising or water ring pelletising.

In carrying out the invention a thermoplast in the form of coarse powder or pellets is fed to an extruder and molten in a first section. The thermoplast can be polyolefins such as polyethylenes, polypropylenes and their copolymers, polyamides such as nylon 6, nylon 66, polyethers or polyesters. The preferred thermoplasts are polyethylenes and polypropylenes which can contain additives such as stabilizers, fillers, pigments, coupling and other agents.

Then reinforcing fibres are fed via a sidefeeder to the melt or drawn in directly as endless fibre. The reinforcing fibres can be mineral fibres, synthetic fibres or natural fibres. Examples of such fibres are glass fibres, metallic fibres, aramide fibres, carbon fibres, cotton fibres, modified cellulosic fibres, hemp, jute, sisal or flax. The fibres can also be higher melting thermoplastic fibres such as polyester or polyamide fibres. The preferred reinforcing fibres are glass fibres.

The reinforcing fibres can be added in the form of endless fibres, preferably in the form of glass rovings. The rovings can be direct rovings or assembled rovings. The titer of the roving can be for example from 800 to 5000 tex, preferably from 1200 to 3600 tex.

Depending on the desired properties of the final product, the amount of reinforcing fibre can vary from a fibre content of between 10 to 70 %, preferably from between 20 - 40 %.

The reinforcing fibres can also be added as chopped fibre, having a length of 3 - 15 mm, therefore the length of the fibre in the resulting spheroidally pellet can be longer than the maximum pellet length. Preferably the length of the chopped fibre is between 3,5 and 12 mm. Especially preferred are fibre lengths from 4 to 5 mm, but the fibre length of 12 mm is also preferred.

The mixture of the reinforcing fibres and the thermoplast is then conveyed substantially without kneading to a short mixing section. This is done by using elements which nearly exclusively convey and hardly shear.

The following short mixing section comprises one or more low shear mixing elements. Preferably there are one or two mixing elements. In the low shear mixing section there is practically no kneading. The section contains for example one or two or more hedgehog elements. The hedgehog elements can be adjoined or separated by one or more short conveying elements.

In order to press the moiety through the following die plate, it is necessary to build up some pressure, which is done in the following pressure build up zone, which should act as gentle as possible.

The diameter of the holes of the adjacent die plate depends inter alia on the viscosity of the melt, the fibre content and fibre length. The diameter is higher than usual and can vary in the range of 2,8 to 8 mm, preferably from 3,7 to 7 mm, especially from 4 to 5 mm.

Immediately after passing the die plate, pellets of spheroidal shape are cut for example by rotating blades and solidified by the process water, which flows across the die face in a cutting chamber. Warm water having a temperature of e.g. 50 - 60 °C transports the pellets to a dryer, wherein water is separated and the dry spheroidally pellets are discharged.

Spheroidally shaped pellets according to the invention are e.g. obtained by die face pelletising or water ring pelletising.

If endless fibres or chopped fibres which are longer than the longest dimension of the resulting pellets are used, the resulting spheroidally pellets contain fibres longer than the longest dimension of the pellets. Usually at least 5 % by weight of the fibres, preferably at least 10 % by weight are longer than the longest dimension of the pellets. It is preferred that 20 % or 30 % by weight of the fibres or more are longer than the longest dimension of the pellets.

If chopped fibres are used, the amount of fibres which are not so much reduced in its original length is remarkably high. According to the present invention it can easily be reached that 40 % by weight of the fibres still have the 0,4 fold, the 0,5 fold or the 0,6 fold of the original length of the fibre, the longest fibre being at least 3 mm or even 4 mm long. It has been found that the longest fibre detected in the pellet has the length which is very close to the nominal length of the originally used fibre.
If, for example, a nominal fibre length of 4,5 mm was used, the longest detected fibre in the pellet had a length of 4,329 mm.
Depending on the processing conditions and the used ingredients, it can also be achieved that 40 % by weight of the fibres have the 0,8 or 0,85 fold of the original length.

Another advantage of the present invention is that at least 20 % by weight of the fibres can have the 0,6 fold, the 0,7 fold or the 0,8 fold of the length of the longest fibre.
At least 50 % by weight of the fibres have the 0,4 fold or the 0,5 fold of the original length of the longest fibre.

The spheroidally shaped pellets contain a large part of long fibres, have high fluidity and are produced in a compounding step of high productivity.
They are useful for the production of articles of high impact strength and high stiffness, such as automotive parts, especially structural parts like dashboards, seat structures etc.

### Example 1

A corotating twin screw extruder, Werner & Pfleiderer ZSK58 having a screw speed of 300 rpm and a temperature profile of 250/260/270/270/280/280/280/280/280/280/ °C was fed with 160 kg/h PP of a mixture of 78 % by weight of a PP homopolymer having an MFR (230 °C/2,16 kg) of 17,5 and 16 % by weight of a PP copolymer having an MFR (230 °C/2,16 kg) of 0,3 and 6 % by weight of additives.
At the end of the melting section 90,5 kg/h of glass endless fibre in the form of 25 rovings, each having 1200 tex and a fibre diameter of 17 µm were fed directly to the melt.
The fibre containing melt was transported substantially without kneading to a short mixing section having two hedgehog elements followed by a short pressure build up zone and extruded through a die plate having 16 holes of a diameter of 4,5 mm and pelletised under water to form pellets of spheroidal shape.

The spheroidally shaped pellets had a maximum length of 8 mm and a glass content of 36,2 % (by weight).
10 % by weight of the glass fibres were longer than 8,7 mm.

### Example 2

The extruder of example 1 having the same screw configuration having a temperature profile of 180/200/210/220/220/230/230/220/220/220/235/280 °C was fed with 275 kg/h of the same PP-material and additive as in example 1, but with 155 kg/h of chopped fibres, having a nominal staple length of 4,5 mm and a filament diameter of 13 µm.
The obtained spheroidally shaped pellets had a maximum length of 8 mm and a glass content of 36,1 % by weight
The longest fibre was 4,329 mm long,
20 % by weight of the glass fibres were longer than 4,047 mm
40 % by weight of the glass fibres were longer than 3,735 mm.
50 % by weight of the glass fibres were longer than 2,670 mm

The fibre lengths were found by burning off just the thermoplastic resin of a pellet in a 625 °C furnace, photographing the result by a microscope, measuring the lengths of 100 randomly selected fibres from the photograph.

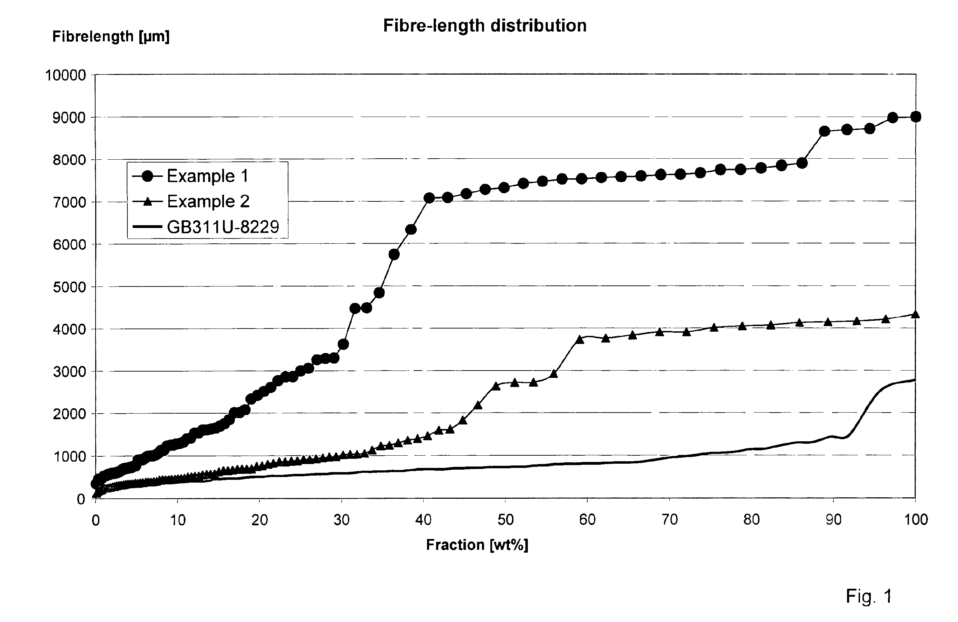

Fig. 1 shows the fibre length distribution of spheroidally shaped pellets made by using glass endless fibres (Example 1) and by using chopped fibres of a nominal staple length of 4,5 mm. (Example 2).
For comparison the fibre length distribution of the commercial product GB311 U-8299 (Borealis) made by using chopped fibres of a nominal staple length of 4,5 mm, was also quantified.

## Claims

1. A process for the production of thermoplastic resin pellets having spheroidal shape and containing long reinforcing fibres **characterised by** the following steps in downstream order:
a) melting a thermoplastic resin in a first section of an extruder
b) adding reinforcing fibres to the melt
c) conveying the mixture substantially without kneading to a short mixing section
d) passing the short mixing section, a short pressure build up section and the adjacent die plate
e) cutting the obtained moiety hot by die face pelletising or water ring pelletising.

2. The process as claimed in claim 1, **characterised in that** the short mixing section comprises one or more short low shear mixing elements.

3. The process as claimed in claim 1, **characterised in that** the reinforcing fibre is fed as endless fibre.

4. The process as claimed in claim 1, **characterised in that** the reinforcing fibre is fed as staple fibre.

5. Thermoplastic resin pellets having spheroidal shape and containing long reinforcing fibres, **characterised in that** the pellets contain fibres longer than the longest dimension of the pellets.

6. Thermoplastic resin pellets according to claim 5, **characterised in that** at least 5 % by weight of the fibres are longer than the longest dimension of the pellets.

7. Thermoplastic resin pellets having spheroidal shape and containing long reinforcing fibres, **characterised in that** at least 40 % by weight of the fibres are longer than the 0,4 fold of the longest fibre, which is at least 3 mm long.

8. Thermoplastic resin pellets having spheroidal shape and containing long reinforcing fibres, **characterised in that** at least 40 % by weight of the fibres are longer than the 0,4 fold of the longest fibre, which is at least 4 mm long

9. Thermoplastic resin pellets according to claim 7, **characterised in that** at least 20 % by weight of the fibres are longer than the 0,6 fold of the longest fibres, which is at least 3 mm long.

10. Thermoplastic resin pellets according to claim 7, **characterised in that** at least 20 % by weight of the fibres are longer than the 0,6 fold of the longest fibres, which is at least 4 mm long.

11. Use of thermoplastic resin pellets according to one of claims 5 - 10 for the production of automotive parts, especially structural parts like dashboards or seat structures.
